(19)

Europäisches Patentamt
European Patent Office
Office européen des brevets

(11) **EP 1 980 835 A1**

(12) **EUROPÄISCHE PATENTANMELDUNG**

(43) Veröffentlichungstag:
**15.10.2008 Patentblatt 2008/42**

(51) Int Cl.:
*G01N 3/20* (2006.01)   *G01N 3/04* (2006.01)

(21) Anmeldenummer: **07007381.2**

(22) Anmeldetag: **11.04.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(71) Anmelder: **ETH Zürich**
**8092 Zürich (CH)**

(72) Erfinder: **Papes, Ondrej**
**8049 Zürich (CH)**

(74) Vertreter: **Kley, Hansjörg**
**Siemens AG**
**Postfach 22 16 34**
**80506 München (DE)**

(54) **Vorrichtung zur Ermittlung von Biegesteifigkeit**

(57)    Zur schnellen Messung der Biegesteifigkeit und Biegefestigkeit von länglichen Materialproben (9) wird eine einfache und mobile Biegemaschine (10) mit zwei Spannfuttern (2, 3) vorgeschlagen. Dabei wird die Materialprobe (9) im Wesentlichen in um 180° gebogener Form aufgenommen. Ein Aktuator (1) verändert den Abstand B zwischen den beiden Spannfuttern (2, 3) und damit die Belastung auf die Probe (9). Dadurch dass die Probe (9) nur an zwei Punkten eingespannt ist, können grosse Deformationen kontrolliert realisiert werden ohne dass unbestimmbare Reibungseffekte die Interpretation erschweren.

Fig 2

EP 1 980 835 A1

## Beschreibung

Die Erfindung bezieht sich auf eine Biegemaschine nach dem Oberbegriff des Patentanspruchs 1.

Vorliegend geht es um längliche Materialproben, die mittleren und grossen Dehnungen ausgesetzt werden sollen um eine ggf. beschädigungsfreie und schnelle Messung der Biegesteifigkeit und Biegefestigkeit vornehmen zu können. Beispiele solcher Materialproben sind (nicht abschliessende Aufzählung):

- Monokristalle aus Si oder Ge,
- CoNi-Legierungen,
- Stahl- und Kupferbänder,
- Glasfasern.

Diese Materialproben haben meistens eine bandartige Form. Dabei ist das Verhältnis Länge zu Breite sehr hoch, so in der Grössenordnung von rund 50:1.

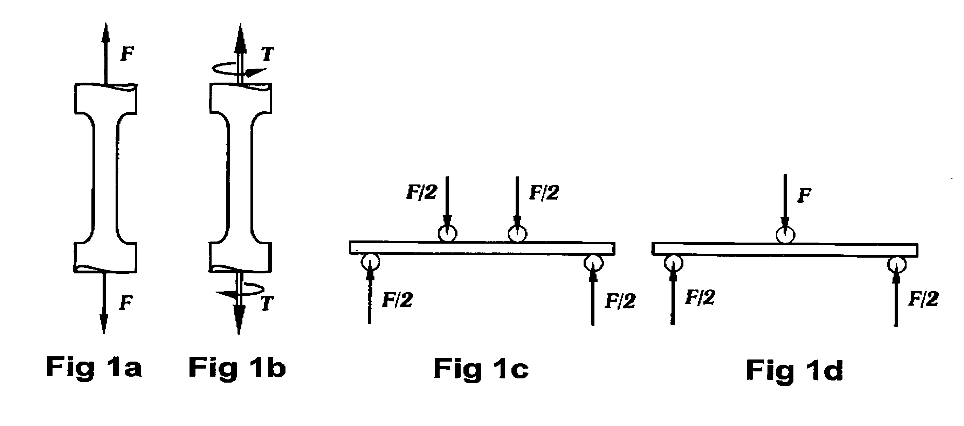

Aus dem allgemeinen Stand der Technik werden anhand der Figuren 1a bis 1d die bekannten Verfahren zur Bestimmung von Materialeigenschaften wie Steifigkeit, Fliess- und Bruchgrenze, Relaxation oder Verfestigung nachstehend erläutert.

### i) Zugversuch

Dabei wird eine Materialprobe zwischen zwei Spannfuttern eingeklemmt, in axialer Richtung gezogen und die Zugkraft gemessen. Die mechanischen Eigenschaften werden aus der Kraft-Verschiebungskurve extrahiert. Ein Nachteil der Methode besteht in der Notwendigkeit des Festhaltens der Probe, was z.B. über eine Klemmverbindung oder aber mittels Formschluss erfolgt. Die Materialprobe wird im ersteren Fall durch das Klemmen zusätzlich beansprucht, im zweiten Fall muss die Probengeometrie mit einer Schnittstelle zur Maschine ausgerüstet werden. Die Beurteilung der Bruchgrenze bei spröden Werkstoffen wird dadurch erschwert, dass die grösste Beanspruchung im Bereich einer Probeneinschnürung erfolgt, was mit inhomogenen Spannungsfeldern verknüpft ist, vgl. Fig. 1a.

### ii) Torsionsversuch

Ein Torsionsversuch ist vergleichbar mit einem Zugversuch, nur wird die Probe tordiert statt gezogen, dies ist in der Fig. 1b mit der Torsion T dargestellt.

### iii) 3-Punkt Biegeversuch

Die Materialprobe wird auf zwei Lagern aufgelegt und mit einem Stempel gestossen, worauf sie sich durchbiegt. Durchbiegung und Kraft werden gemessen und dienen der Bestimmung der mechanischen Eigenschaften des Materials. Ein Nachteil der Methode kann darin bestehen, dass sich der Kontaktpunkt Stempel-Probe nahe des Ortes grösster Zugbeanspruchung befindet und daher die gemessene Bruchspannung von diesem Kontakt beeinflusst wird. Die Interpretation der Messdaten bei grossen Deformationen wird durch die Reibung zwischen Probe und Auflagern erschwert, vgl. Fig. 1d.

### iv) 4-Punkt Biegeversuch

Wie 3-Punkt Biegeversuch mit dem Unterschied, dass der Stempel nun zwei Kontaktpunkte mit der Probe aufweist. Die Beanspruchung im mittleren Bereich ist ein konstantes Biegemoment und die Bestimmung der Bruchfestigkeit kann ohne Einfluss der Krafteinleitungsstellen erfolgen. Dafür ist aufgrund statischer Überbestimmtheit die Aufteilung der Kräfte auf die Kontaktpunkte Unsicherheiten unterworfen, vgl. Fig. 1c.

In DE 102 40 016 A1 [1] ist ein Keil-Spannzeug zum kraftschlüssigen Einspannen von Proben offenbart, bei dem zwischen der Führungsflächen der Spannkeile jeweils mindestens ein Hilfskeil derart angeordnet ist, dass die Spannkeile mit den daran befestigten Spannbacken und die Hilfskeile gemeinsam im Keil-Spannkopf verschiebbar sind. Ein solches Keil-Spannzeug eignet sich nur sehr bedingt zum Einspannen von schlanken, elastischen Materialproben, die mittleren und grossen Dehnungen ausgesetzt werden sollen.

In WO 1998/49534 A1 [2] wird eine «längliche» Biegemaschine vorgestellt, bei der eine Mehrpunkt-Biege-Einspannvorrichtung für das Einspannen von steifen und brüchigen Werkstoffen vorgesehen ist. Durch die längliche und schlanke Ausgestaltung ist diese Maschine allein aus geometrischen Gründen nicht anwendbar für schlanke, elastischen Materialproben, die grossen Dehnungen zur Messung der Biegesteifigkeit und Biegefestigkeit zu unterziehen sind.

Ausgehend von diesem Stand der Technik stellt sich für die vorliegende Erfindung die Aufgabe, eine einfache und mobile Biegemaschine anzugeben für längliche, elastischen Materialproben, die mittleren und grossen Dehnungen auszusetzen sind, um eine schnelle Messung der Biegesteifigkeit und Biegefestigkeit vornehmen zu können.

Diese Aufgabe wird erfindungsgemäss für eine Biegemaschine durch die im Patentanspruch 1 angegebenen Merkmale gelöst.

Durch die Erfassung der Probe mit zwei Spannfuttern an nur zwei Punkten kann die längliche, elastische Probe in gebogenem Zustand leicht zwischen die Spannfutter eingefügt werden, ohne dass eine besondere Betätigung der Spannfutter erforderlich ist. Durch die Elastizität der länglichen Probe hält sich diese selbst in einem statisch bestimmten Zustand. Der Autor verändert die Distanz der beiden Spannfutter und dadurch wird die Probe innerhalb des Elastizitätsbereiches einer entsprechend veränderten Kraft ausgesetzt. Diese Kraft wird vorzugsweise von einem DMS-Kraftsensor erfasst. Dessen Signal kann in einer externen Einheit anhand vorgegebener Elastizitätskurven ausgewertet werden.

Die vorliegende Zwei-Punkt-Biegemaschine kann in externen Analysegeräten wie Lichtmikroskopen, Raman-Mikroskopen, Röntgendiffraktometern, Synchrotronquellen etc. eingesetzt werden, womit die Untersuchung von weiteren Materialeigenschaften bei kontrollierter Deformation zugänglich wird.

Ebenso können bei wenig elastischen bzw. nahezu inelastischen Materialproben Eigenschaften wie Biegesteifigkeit, Streckgrenze, Kriechverhalten oder Verfestigung bestimmt werden.

Die Zweipunkt-Biegemaschine gemäss der vorliegenden Erfindung ergänzt einerseits marktübliche Maschinen zur Durchführung dieser klassischen Verfahren und hat folgende Vorteile:

- Es ist keine Zerteilung des Ausgangsmaterials erforderlich, ebenso erübrigt sich eine spezielle Formgebung der Probe zum Zwecke des Einspannens.
- Es ist kein Festschrauben der Materialprobe nötig, beim Einlegen richtet sich die Probe selbständig aus, ungewollte Beanspruchungen sind nicht vorhanden, die Krafteinleitung ist eindeutig.
- Es können grosse Deformationen kontrolliert realisiert werden ohne dass unbestimmbare Reibungseffekte die Interpretation erschweren.
- Der Ort grösster Beanspruchung befindet sich am Apex der Biegekurve, somit fernab der Krafteinleitungsstellen und in Abwesenheit von geometrischen Spannungskonzentratoren.
- Der Versuch ist selbstähnlich solange die Spannfutterbreite B' sehr viel grösser als die Probendicke D ist.

Diese Vorteile erlauben die schnelle, zuverlässige und zerstörungsfreie Messung der Elastizität sowie die Bestimmung von Bruch- und Fliessgrenzen ohne Störung durch unkontrollierte Beanspruchungen des kritischen Ortes.

Vorteilhafte Weiterbildungen sind Gegenstand der abhängigen Ansprüche.

Ein Ausführungsbeispiel der vorliegenden Erfindung wird nachstehend anhand der Figuren erläutert, wobei die Figuren 1a bis 1d Prinzipdarstellungen von Messversuchen aus dem Stand der Technik zeigen:

Fig. 1a    Prinzipdarstellung eines Zugversuches;

Fig. 1b    Prinzipdarstellung eines Torsionsversuches;

Fig. 1c    Prinzipdarstellung eines 4-Punkt Biegeversuches;

Fig. 1d    Prinzipdarstellung eines 3-Punkt Biegeversuches;

Fig. 2    Prinzipschema der Zwei-Punkt-Biegemaschine;

Fig. 3a    experimentelles Kraft-Verschiebungsdiagramm für eine gebrochene Probe, zusammen mit einer Schar der theore-tisch erwarteten Kurven für verschiedene E-Moduli;

Fig. 3b    Kraft-Verschiebungsdiagramm (Hysterese) einer plastifizierenden Probe, zusammen mit einer Schar der theoretisch erwarteten Kurven für verschiedene E-Moduli.

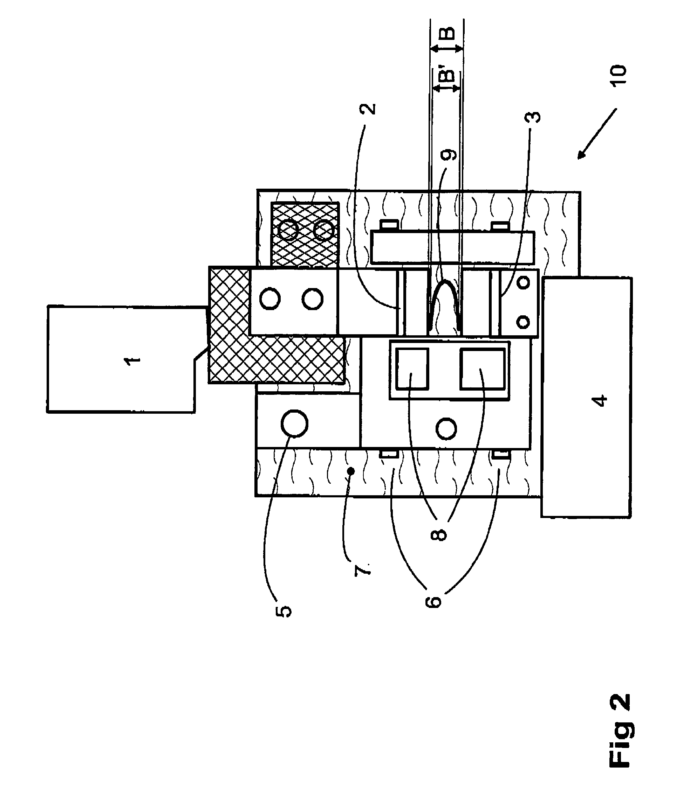

Die prinzipielle Wirkungsweise der Zwei-Punkt-Biegemaschine - auch 2-Punkt-Biegemaschine genannt - wird anhand der Figur 2 erläutert. Die einzelnen Komponenten (siehe weiter unten) werden von einer Aluminiumgrundplatte 7 getragen. Die längliche Materialprobe 9 wird zwischen zwei Spannfutter 2 und 3 eingeführt, indem die längliche Materialprobe 9 um 180° gebogen wird und sich infolgedessen zwischen den Futtern selbständig verklemmt. Die Probe 9 hat dabei nur an zwei Berührungspunkten mit den Spannfuttern 2 und 3 Kontakt zur Messapparatur, woraus sich der Name 2-Punkt-Biegemaschine ableitet. Mittels eines Kraftsensors 4 kann am statischen Spannfutter 3 die Einspannkraft F gemessen werden. Über das per Aktuator 1 - hier Schrittmotor 1 - betätigte Spannfutter 2 wird die der Materialprobe 9 zur Verfügung stehende Spannfutterbreite B' verändert. Verschiedene Justierungsmöglichkeiten mit Schrauben 5 und 6 erlauben es, die Spannfutter 2 und 3 auszurichten und die Neigung der Maschine einzustellen. Damit wird die Lage der eingespannten Probe 9 einstellbar, was besonders in externen Analysegeräten wichtig ist. Stellmotor 1 und Kraftsensor 4 sind an einen mobilen Computer angeschlossen (in Fig. 2 nicht dargestellt), von welchem aus die Steuerung und Auswertung der Werte B' und F erfolgt.

Die Spannfutter 2 und/oder 3 können konkav ausgebildet sein, damit die Materialprobe 9 sich besser selbständig ausrichten kann. Die Teflonwanne 8 dient der Probenaufnahme. Die Materialprobe 9 wird von der Teflonwanne 9 mit einem Stempel - nicht dargestellt in der Figur 2 - zwischen die beiden Spannfutter 2 und 3 eingebracht.

Bezüglich des Abstandes der Spannfutter 2 und 3 ist folgender Sachverhalt zu berücksichtigen: Die effektive Spannfutterbreite B' ist die von der Materialprobe 9 «wahrgenommene» Breite. Diese Grösse B' ist bei der nachstehend angegebenen Formel einzusetzen. Demgegenüber bezeichnet die physikalische oder korrekter geometrische Spannfutterbreite B den tatsächlichen Abstand B zwischen den Spannfuttern 2 und 3. Die effektive Spannfutterbreite B' und die physikalische Spannfutterbreite B sind bei symmetrischem Probenquerschnitt über folgende Beziehung verknüpft, wobei D für den Durchmesser bzw. die Dicke der Materialprobe 9 steht:

$$B' = B - D .$$

Unter Kenntnis der Probengeometrie ist das alleinige Einführen der elastischen Materialprobe 9 in die 2-Punkt-Biegemaschine 10 bereits ausreichend um die Biegesteifigkeit $E\,I_z$ und bei bekannter Probengeometrie somit auch das Elastizitätsmodul E in Biegung mittels Einsetzen der Werte B' und F in die nachstehend aufgeführte Formel zu bestimmen, wobei α = 0.834626842 ... eine mathematische Konstante ist:

$$F = \frac{2\,E\,I_z}{\alpha^2 B'^2}\,.$$

Beim Einsetzen in die Maschine wird die Materialprobe 9 weder übermässig geklemmt noch gepresst und ist somit keiner einspannungsbedingten Beschädigungsgefahr ausgesetzt. Die Messung der Steifigkeit kann beschädigungsfrei innert kürzester Zeit erfolgen. Die unbeschädigte Probe kann nach erfolgter Messung aus der Anlage wieder entnommen und weiterverwendet werden. Da nur der gebogene Teil der länglichen Materialprobe 9 für die Bestimmung der Steifigkeit ausschlaggebend ist, kann auch ein Endlos-Draht 9 oder ein Endlos-Band 9 dieser Art von Steifigkeitsmessung unterzogen werden. Die Zerteilung des Drahtes 9 zu Messzwecken ist somit nicht notwendig.

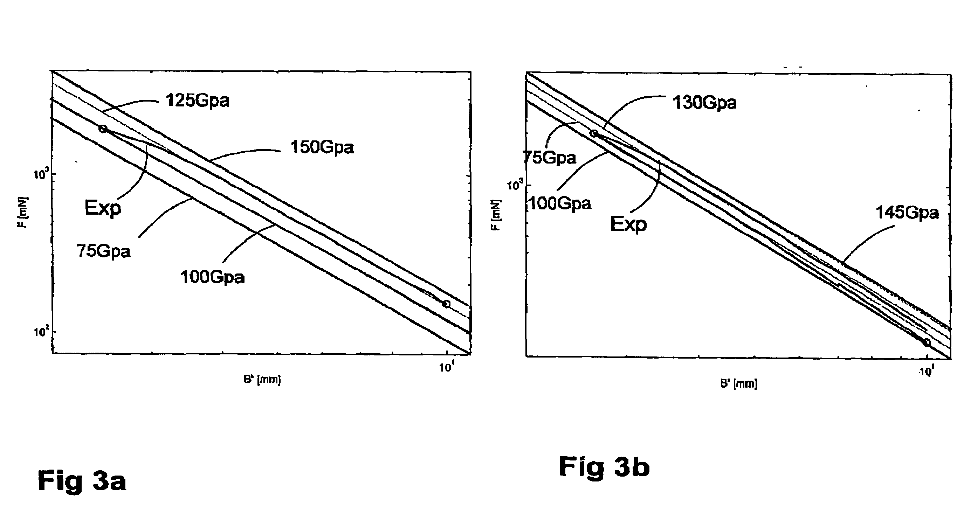

Weiter kann durch Annäherung der Spannfutter 2 und 3 mittels Schrittmotor 1 die Spannfutterbreite B' verkleinert werden, wobei die Probe 9 zusammengedrückt und die Einklemmkraft F erhöht werden. Die Physik sorgt dafür, dass sich die Geometrie der Biegelinie selbständig an die veränderte Spannfutterbreite B' anpasst und selbstähnlich bleibt. Bei Annäherung der Spannfutter 2 und 3 nimmt der Krümmungsradius der Materialprobe 9 ab und die Materialbelastung im am stärksten gekrümmten Apex der Biegelinie nimmt zu. Somit ist es möglich, auch die Bruch- oder Fliessgrenze des Materials anzusteuern und diese aus dem aufgezeichneten Verlauf von F über B' herauszulesen und zu quantifizieren, siehe dazu die Angaben in den Figuren 3a und 3b.

In den Figuren 3a und 3b sind Kraft-Verschiebungsdiagramme, doppelt logarithmisch aufgetragen:

Figur 3a zeigt den Verlauf für eine gebrochene Probe.
Figur 3b zeigt die Hysterese einer plastifizierenden Probe.

Mit dem Bezugszeichen Exp sind die experimentell erzielten Ergebnisse eingetragen. Die in den Diagrammen angegebenen Grössen wie 100 GPa, 135 GPa, usw. bezeichnen die mit diesen E-Moduli in Biegung erwarteten theoretischen Kraft-Verschiebungskurven gemäss vorstehender Formel.

Das Elastizitätsmodul E hat in diesem Kontext folgende Bedeutung: «E-Modul in Biegung». Es ist (auch) eine Materialkonstante und steht mit den üblichen Grössen «Elastizitätsmoduli», «Querkontraktionszahlen», «Steifigkeitsmoduli» oder «Komplianzen» in definierter mathematischer Beziehung. Hierzu sei angemerkt, dass es viele Möglichkeiten gibt, das mechanische Verhalten eines elastischen Körpers auf Materialkonstanten abzubilden. Die Wahl der Konstanten ist nicht eindeutig, es kann höchstens von der Vollständigkeit einer Menge von Konstanten gesprochen werden. Das umgangssprachliche «E-Modul» wird nur dann gemessen, wenn die gezogene Probe 9 lateral völlig frei ist (Querkontraktion unbehindert). Hingegen misst man bei lateral festgehaltener Probe (Querkontraktion verhindert) nicht das «E-Modul», sondern die «Steifigkeit». Das in dieser Schrift verwendete «E-Modul in Biegung» ist bezüglich dieser zwei Grössen ein Zwischending, denn die neutrale Faser der gebogenen Probe verhindert unter Umständen eine der beiden lateralen Querkontraktionen. Für eine Umrechnung in bekannte Konstanten muss deshalb auch die Verkrümmung des Probenquerschnittes genauer betrachtet werden. Bei industriellen Applikationen geht es jedoch oft nicht um eine solche vollständige Charakterisierung eines Materials oder der Struktur, sondern um die Angabe einer repräsentativen Materialkonstante, mit welcher sich die Funktionstüchtigkeit der betroffenen Konstruktion kontrollieren lässt, deren Reproduzibilität gewährleistet ist und die mit einem möglichst applikationsnahen Messaufbau gemessen werden kann.

$E\,I_Z$ ist die «Biegesteifigkeit». Bei der vorliegenden 2-Punkt-Biegemaschine 10 ist dies die Grösse, welche primär gemessen wird. In der linearen Balkentheorie ist, wie die Formel es bereits ausdrückt, die Biegesteifigkeit $E\,I_Z$ das Produkt aus «E-Modul» E und «Flächenträgheitsmoment» $I_Z$, wobei ersteres nun gemäss obiger Ausführung zu interpretieren ist und zweiteres aus der Geometrie des Balkenquerschnitts folgt. Ist die Geometrie des Querschnittes bekannt, dann kann $I_Z$ berechnet werden und somit aus der gemessenen Biegesteifigkeit $E\,I_Z$ das «E-Modul in Biegung» berechnen gemäss

$$E = E\,I_z\,/\,I_z\,.$$

Im vorliegenden Ausführungsbeispiel ist das Spannfutter 2 mit einem Aktuator 1 verbunden und das Spannfutter 3 mit einem Kraftsensor 4. Dies ist jedoch nicht zwingend. Es ist auch eine Ausführungsform möglich, bei der Aktuator 1 und Kraftsensor 4 mit dem gleichen Spannfutter 2 oder 3 gekoppelt sind.

**Liste der verwendeten Bezugszeichen und Grössen**

| | |
|---|---|
| 1 | Schrittmotor; Aktuator |
| 2 | Aktuiertes, betätigtes Spannfutter |
| 3 | Statisches Spannfutter an Kraftsensor |
| 4 | DMS-Kraftsensor |
| 5 | Mikrometerschraube |
| 6 | Madenschrauben |
| 7 | Aluminiumgrundplatte |
| 8 | Teflonwanne zur Probenaufnahme |

| 9 | Materialprobe |
| 10 | 2-Punkt-Biegemaschine; Zwei-Punkt-Biegemaschine |
| B | Geometrische Spannfutterbreite |
| B' | Von der Materialprobe wahrgenommene Spannfutterbreite; effektive Spannfutterbreite |
| D | Dicke, Durchmesser der Materialprobe |
| F | Kraft |
| E | Elastizitätsmodul in Biegung |
| $I_Z$ | Flächenträgheitsmoment |
| $E\,I_Z$ | Biegesteifigkeit |
| $\alpha$ | Mathematische Konstante |

**Liste der zitierten Dokumente**

[1] DE 102 40 016 A1
«Keil-Spannzeug zum kraftschlüssigen Einspannen von Proben» SOBAtec GmbH, DE - 01917 Kamenz

[2] WO 1998/049534 A1
«Bending Apparatus»
European Atomic Energy community (EURATOM), LU - 2920 Luxembourg

**Patentansprüche**

1. Biegemaschine (10) zur Messung einer länglichen Materialprobe (9), wobei die Materialprobe (9) zwischen zwei Spannfuttern (2, 3) eingefügt ist, die in einem Abstand B zueinander angeordnet sind, **dadurch gekennzeichnet, dass** die Spannfutter (2, 3) so ausgebildet sind, die Materialprobe (9) im Wesentlichen in um 180° gebogener Form aufzunehmen und dass ein Spannfutter (3) mit einem Kraftsensor (4) gekoppelt ist.

2. Biegemaschine (10) nach Anspruch 1, **dadurch gekennzeichnet, dass** ein Spannfutter (2) mit einem Aktuator (1) verbunden ist, um durch eine Bewegung des Aktuators (1) den Abstand B zwischen den Spannfuttern (2, 3) zu verändern und ein Spannfutter (2, 3) eine konkave Form aufweist, damit die selbständige Ausrichtung der Materialprobe unterstützt wird.

3. Biegemaschine (10) nach Anspruch 1 oder 2 **dadurch gekennzeichnet, dass** ein Computer mit der Biegemaschine (10) verbunden ist, um den Aktuator (1) anzusteuern und die Spannfutterbreite B zu steuern und vom Kraftsensor (4) entstammende Signale als eine Kraft F auszuwerten.

4. Biegemaschine (10) nach Anspruch 3, **dadurch gekennzeichnet, dass**

die Biegesteifigkeit $E\,I_Z$ der Materialprobe (9) aus der von der Materialprobe (9) wahrgenommenen Spannfutterbreite B' und der ausgewerteten Kraft F bestimmbar ist gemäss der Formel

$$F = \frac{2\,E\,I_z}{\alpha^2 B'^2}$$

wobei $\alpha$ eine mathematische Konstante ist.

5. Biegemaschine (10) nach einem der Ansprüche 1 bis 4, **dadurch gekennzeichnet, dass** Schrauben (5, 6) vorgesehen sind, um die Spannfutter (2, 3) und/oder die Biegemaschine (10) auszurichten.

Fig 1a  Fig 1b

Fig 1c

Fig 1d

Fig 2

**Fig 3b**

**Fig 3a**

**Europäisches Patentamt**

**EUROPÄISCHER RECHERCHENBERICHT**

Nummer der Anmeldung

EP 07 00 7381

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 63 045530 A (AGENCY IND SCIENCE TECHN) 26. Februar 1988 (1988-02-26) * Zusammenfassung * ----- | 1-5 | INV. G01N3/20 G01N3/04 |
| A | DE 20 2005 020893 U1 (PHOENIX CONTACT GMBH & CO [DE]) 19. Oktober 2006 (2006-10-19) * Abbildung 2 * * Absätze [0014], [0029] * ----- | 1-5 | |
| A | WO 03/098193 A (ORGA KARTENSYSTEME GMBH [DE]; THIES JANCZEK [DE]) 27. November 2003 (2003-11-27) * Abbildung 3 * ----- | 1-5 | |
| A | DE 196 45 334 A1 (KUNSTSTOFF ZENTRUM IN LEIPZIG [DE]) 7. Mai 1998 (1998-05-07) * Abbildung 1 * ----- | 1-5 | |

| | RECHERCHIERTE SACHGEBIETE (IPC) |
|---|---|
| | G01N |

Der vorliegende Recherchenbericht wurde für alle Patentansprüche erstellt

| Recherchenort | Abschlußdatum der Recherche | Prüfer |
|---|---|---|
| München | 4. September 2007 | Timonen, Tuomo |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

....................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 07 00 7381

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-09-2007

| Im Recherchenbericht angeführtes Patentdokument | Datum der Veröffentlichung | Mitglied(er) der Patentfamilie | Datum der Veröffentlichung |
|---|---|---|---|
| JP 63045530 A | 26-02-1988 | KEINE | |
| DE 202005020893 U1 | 19-10-2006 | KEINE | |
| WO 03098193 A | 27-11-2003 | DE 10222211 A1 | 27-11-2003 |
| DE 19645334 A1 | 07-05-1998 | KEINE | |

EPO FORM P0461

Für nähere Einzelheiten zu diesem Anhang : siehe Amtsblatt des Europäischen Patentamts, Nr.12/82

**EP 1 980 835 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10240016 A1
- WO 199849534 A1

- DE 01917, Kamenz
- WO 1998049534 A1